# EUROPÄISCHE PATENTSCHRIFT

(11) **EP 3 034 199 B1**
(45) Veröffentlichungstag und Bekanntmachung des Hinweises auf die Patenterteilung: **14.11.2018**
(21) Anmeldenummer: 15197957.2
(22) Anmeldetag: 04.12.2015
(51) Int. Cl.: B22D 17/20, B29C 45/38

(54) **VORRICHTUNG ZUM NACHBEARBEITEN EINES SPRITZGUSSBAUTEILS UND ANORDNUNG MIT MEHREREN VORRICHTUNGEN**
DEVICE FOR SUBSEQUENTLY TREATING AN INJECTION MOULDED COMPONENT AND AN ASSEMBLY COMPRISING A PLURALITY OF DEVICES
DISPOSITIF DE RETRAITEMENT D'UN COMPOSANT MOULE PAR INJECTION ET AGENCEMENT COMPRENANT PLUSIEURS DISPOSITIFS

(30) Priorität: 15.12.2014 DE 202014106045 U
(43) Veröffentlichungstag der Anmeldung: 22.06.2016
(73) Patentinhaber: Finke Formenbau GmbH, 33184 Altenbeken-Buke (DE)
(72) Erfinder: Finke, Markus, 33184 Altenbeken-Schwaney (DE); Feldmann, Hartwig, 33189 Schlangen (DE); Bölte, Andreas, 33184 Altenbeken-Schwaney (DE)
(74) Vertreter: Bittner, Thomas L.

(56) Entgegenhaltungen:
- EP-A1- 2 100 678
- DE-A1- 10 302 751
- US-A1- 2005 204 881
- US-A1- 2007 122 520
- US-A1- 2009 016 829
- US-A1- 2009 320 665
- US-A1- 2012 017 739
- US-A1- 2014 182 439

## Beschreibung

Die Erfindung betrifft eine Vorrichtung zum Nachbearbeiten eines Spritzgussbauteils sowie eine Anordnung mit mehreren Vorrichtungen.

### Hintergrund

Derartige Vorrichtungen werden genutzt, um zuvor hergestellte Spritzgussbauteile nachzubearbeiten, insbesondere zum Abtrennen der beim Spritzgießen entstehenden Angussstücke. Zum Abtrennen sind bei bekannten Vorrichtungen Trennwerkzeuge vorgesehen, die als Schneidwerkzeug ausgebildet sind und jeweils an einem Werkzeughalter gespannt sind Um die Nachbearbeitung auszuführen, wird das hergestellte Spritzgussbauteil bei bekannten Vorrichtungen auf Auflagerbauteilen abgelegt. Die Auflagerbauteile sind über eine Tragplatte der Vorrichtung verteilt angeordnet, um eine über eine verteilte Stützung des Spritzgussbauteils zu gewährleisten. Getrennt von und zusätzlich zu den Auflagerbauteilen sind an der Tragplatte Werkzeughalter für die Schneidwerkzeuge vorgesehen, um diese zu halten und zu spannen. Ist das zuvor hergestellte Spritzgussbauteil auf den Auflageteilen abgelegt, werden die Angussstücke mittels der Schneidwerkzeuge abgeschnitten.

Bei den bekannten Schneidvorrichtungen treten Qualitätsprobleme auf, insbesondere derart, dass beim Abtrennen der Angussstücke immer wieder Reststücke an dem Spritzgussbauteil verbleiben, wodurch störende Überstände an dem Spritzgussbauteil entstehen.

Im Dokument DE 103 02 751 B4 ist ein Verfahren zum Entfernen eines Angusses von einem Gussteil, insbesondere einem Kurbelgehäuse einer Brennkraftmaschine beschrieben.

Im Dokument DE 10 2009 027 996 A1 sind ein Verfahren und eine Vorrichtung zum Schneiden oder Trennen eines Werkstücks, insbesondere zum Abtrennen eines Angusses vom Werkstück, beschrieben, wobei das Werkstück in eine Werkstück-Halterung gebracht wird und ein Werkzeug zum Schneiden oder Trennen mittels eines Stellantriebs zum Werkstück bewegt und dort bestätigt wird.

Im Dokument DE 696 22 224 T2 sind ein Verfahren und eine Vorrichtung zum Entfernen von Angussstücken offenbart.

Aus dem Dokument US 2009 / 0320665 A1 ist eine Vorrichtung zum Nachbearbeiten eines Spritzgussbauteils bekannt. Die Vorrichtung weist ein mehrstöckiges Auflagerbauteil mit einem Basisbauteil und einem hieran angeordneten Auflagerelement auf, in welchem das Spritzgussbauteil zum Nachbearbeiten im Bereich einer Auflagerfläche zur Auflage kommt. Es ist ein Trennwerkzeug vorgesehen, welches eingerichtet ist, ein oder mehrere Angussstücke an dem Spritzgussbauteil abzutrennen. Das Trennwerkzeug weist ein Schneidwerkzeug mit einer Schneide an dem Basisbauteil und einer weiteren Schneide an einem verlagerbaren Bauteil auf, welches an dem Basisbauteil verlagerbar aufgenommen ist.

Eine weitere Vorrichtung zum Nachbearbeiten eines Spritzgussbauteils ist in dem Dokument US 2007 / 0122520 A1 offenbart.

### Zusammenfassung

Aufgabe der Erfindung ist es, eine verbesserte Vorrichtung zum Nachbearbeiten eines Spritzgussbauteils sowie einer Anordnung mit mehreren Vorrichtungen anzugeben, bei denen die Nachteile des Standes der Technik vermieden sind. Ein exaktes und qualitätssicherndes Abtrennen der Angussstücke an dem Spritzgussbauteil soll ermöglicht sein.

Zur Lösung der Aufgabe sind eine Vorrichtung zum Nachbearbeiten eines Spritzgussbauteils sowie einer Anordnung mit mehreren Vorrichtungen zum Nachbearbeiten eines Spritzgussbauteils nach den unabhängigen Ansprüchen 1 und 6 geschaffen. Ausgestaltungen sind Gegenstand von abhängigen Unteransprüchen.

Nach einem Aspekt ist eine Vorrichtung zum Nachbearbeiten eines Spritzgussbauteils geschaffen, welche ein Auflagerbauteil aufweist, an dem im Bereich einer Auflagefläche ein Spritzgussbauteil zum Nachbearbeiten zur Auflage kommt. Die Vorrichtung weist weiterhin ein Trennwerkzeug auf, welches eingerichtet ist, ein oder mehrere Angussstücke an dem auf dem Auflagerbauteil angeordneten Spritzgussbauteil abzutrennen. Das Trennwerkzeug ist mit einem Schneidwerkzeug gebildet, bei dem eine Schneide an dem Auflagerbauteil und eine weitere, der Schneide zugeordnete Schneide an einem verlagerbaren Bauteil angeordnete sind, welches mit der weiteren Schneide relativ zu dem Auflagerbauteil und der hieran angeordneten Schneide verlagerbar ist, derart, dass mittels der Schneide und der weiteren Schneide das eine oder die mehreren Angussstücke abtrennbar sind. Mittels Verlagern des verlagerbaren Bauteils werden die beiden Schneiden aufeinander zu geführt oder voneinander getrennt.

Nach einem weiteren Aspekt ist eine Anordnung mit mehreren Vorrichtungen zum Nachbearbeiten eines Spritzgussbauteils geschaffen, wobei die mehreren Vorrichtungen eingerichtet sind, jeweils einen Auflageabschnitt eines nachzubearbeitenden Spritzgussbauteils aufzunehmen und bei aufgelagertem Spritzgussbauteil ein oder mehrere zugeordnete Angussstücke von dem Spritzgussbauteil abzutrennen. Die mehreren Vorrichtungen bilden eine verteilte Anordnung von Auflageflächen zum Aufnehmen des zu bearbeiteten Spritzgussbauteils. Die mehreren Vorrichtungen können zum Teil oder alle auf einer Tragplatte montiert sein, zum Beispiel einer Metallplatte. Jede der Vorrichtungen verfügt über ein Schneidwerkzeug, um ein oder mehrere Angussstücke von dem aufgelagerten Spritzgussbauteil abzutrennen.

Die Schneide ist an dem Auflagerbauteil feststehend angeordnet sein. Die feststehende Ausführung kann in diesem Zusammenhang bedeuten, dass die Schneide beim Ausführen eines Schneidvorgangs feststehend angeordnet ist und sich lediglich die weitere Schneide auf die Schneide zubewegt. Beispielsweise kann die Schneide an dem Auflagerbauteil angeschraubt sein. Mittels der Schraubverbindung oder einer anderen Verbindungsart kann eine lösbare Montage ausgebildet sein. Es kann vorgesehen sein, dass die Stellung der Schneide an dem Auflagerbauteil einstellbar ist, zum Beispiel mittels Lösen der Schraubverbindung und anschließendem Verschieben der Schneide an dem Auflagerbauteil.

Das verlagerbare Bauteil ist an dem Auflagerbauteil angeordnet sein. Bei dieser Ausführung ist das verlagerbare Bauteil mit der weiteren Schneide an dem Auflagerbauteil montiert.

Das verlagerbare Bauteil ist schwenkbar sein. Auch eine Kombination von Schwenkbewegung und Linearbewegung kann vorgesehen sein.

Das Auflagerbauteil ist mehrstückig ausgeführt sein. Im Fall der mehrstückigen Ausgestaltung können Elemente des Auflagerbauteils lösbar oder nicht lösbar miteinander verbunden sein. So können beispielsweise die Auflagefläche und / oder die Schneide an einem lösbar montierten Bauteil angeordnet sein.

Das Auflagerbauteil weist ein Basisbauteil und ein hieran angeordnetes Auflagerelement, an welchem das Auflagerbauteil im Bereich der Auflagerfläche zur Auflage kommt, auf. Das Auflagerelement kann lösbar an dem Basisbauteil montiert sein, zum Beispiel mittels einer Schraub-und / oder einer Steckverbindung. Das Basisbauteil kann als ein Montageblock ausgebildet sein. Die Ausnehmung, in welche die weitere Schneide und / oder ein Abschnitt des verlagerbaren Bauteils beim Verlagern in die geschlossene Stellung eingeführt werden können, kann an dem Basisbauteil und / oder dem Auflagerelement angeordnet sein. In das Basisbauteil kann die Antriebseinrichtung teilweise oder vollständig integriert sein.

Das verlagerbare Bauteil ist an dem Auflagerelement angeordnet sein. Auch eine Montage des verlagerbaren Bauteils sowohl an dem Basisbauteil wie auch an dem Auflagerelement kann vorgesehen sein.

Die Schneide kann lösbar an dem Auflagerbauteil montiert sein. Die Schneide kann hierbei an einem austausch- oder wechselbaren Bauteil gebildet sein, welches angeschraubt ist. Alternativ oder ergänzend kann die weitere Schneide lösbar und / oder einstellbar an dem verlagerbaren Bauteil montiert sein.

Die Schneide kann am Auflagerbauteil als eine Anschlagfläche gebildet sein, gegen die die weitere Schneide beim Schneidvorgang geführt, wahlweise bis hin zur Kontaktausbildung. Bei dieser Ausführung kann das Abtrennen der Angussstücke mittels Abkneifen ausgeführt werden.

Das Auflagerbauteil kann benachbart zu der Schneide eine äußere Ausnehmung aufweisen, die eingerichtet ist, die weitere Schneide und / oder einen Abschnitt des verlagerbaren Bauteils wenigstens teilweise aufzunehmen, wenn die weitere Schneide zur Schneide hin in eine geschlossene Stellung verlagert ist. Beim Übergang in die geschlossene Stellung, welche auch als Schneidstellung bezeichnet werden kann, werden die weitere Schneide und / oder ein Abschnitt des verlagerbaren Bauteils in die Ausnehmung an dem Auflagerbauteil hinein verlagert.

Das verlagerbare Bauteil kann funktionell an eine Antriebseinrichtung koppeln, die eingerichtet ist, das verlagerbare Bauteil mit der hieran angeordneten weiteren Schneide zwischen einer geöffneten und der geschlossenen Stellung zu verlagern. Die Antriebseinrichtung kann eine elektrische, eine pneumatische oder eine hydraulische Antriebseinrichtung sein. Auch eine Kombination von verschiedenen Antriebsmechanismen kann vorgesehen sein. In einer Ausgestaltung ist die Antriebseinrichtung wenigstens zum Teil in dem Auflagerbauteil gebildet. In Verbindung mit einer pneumatischen oder einer hydraulischen Antriebseinrichtung kann dieses zum Beispiel bedeuten, dass Strömungskanäle in dem Auflagerbauteil verlaufen.

Die Auflagefläche kann eine dreidimensionale Flächenkontur aufweisen, die eingerichtet ist, einen zugeordneten Auflagerabschnitt des Spritzgussbauteils formschlüssig aufzunehmen. Der zugeordnete Auflagerabschnitt des Spritzgussbauteils kommt flächig zur Auflage im Bereich der Auflagefläche.

Bei der Vorrichtung zum Nachbearbeiten eines Spritzgussbauteils kann eine Spanneinrichtung vorgesehen sein, mit der ein aufgelagertes Spritzgussbauteil in der aufgelagerten Stellung gesichert wird, insbesondere während des Abtrennens der Angussstücke.

Mit Hilfe der vorgeschlagenen Vorrichtung ist ein Verfahren zum Nachbearbeiten eines Spritzgussbauteils ermöglicht, bei dem ein zuvor hergestelltes Spritzgussbauteil zum Nachbearbeiten an einem Auflagerbauteil zur Auflage gebracht wird. Nach einem wahlweisen Spannen des Spritzgussbauteils an dem Auflagerbauteil werden ein oder mehrere Angussstücke an dem aufgelagerten Spritzgussbauteil mit Hilfe eines Trennwerkzeugs abgetrennt. Als Trennwerkzeug wird ein Schneidwerkzeug verwendet, bei dem eine Schneide an dem Auflagerbauteil und eine weitere, der Schneide zugeordnete Schneide an einem verlagerbaren Bauteil angeordnet sind, wobei das verlagerbare Bauteil beim Abtrennen der Angussstücke relativ zu dem Auflagerbauteil und der hieran angeordneten Schneide verlagert wird.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine perspektivische Darstellung einer Vorrichtung zum Nachbearbeiten eines Spritz-gussbauteils, bei dem ein Schneidwerkzeug in einer geöffneten Stellunggezeigt ist,
- Fig. 2: eine perspektivische Darstellung der Vorrichtung aus Fig. 1, wobei das Schneidwerk-zeug in einer geschlossenen Stellung ist,
- Fig. 3: Darstellung eines Auflagerelements der Vorrichtung aus Fig. 1 von der Seite und von vorn,
- Fig. 4: Darstellungen eines als Hebelarm ausgeführten verlagerbaren Bauteils der Vorrichtung aus Fig. 1 von der Seite und von vorn und
- Fig. 5: eine perspektivische Darstellung einer Schneidvorrichtung mit mehreren Vorrichtungen zum Nachbearbeiten eines Spritzgussbauteils.

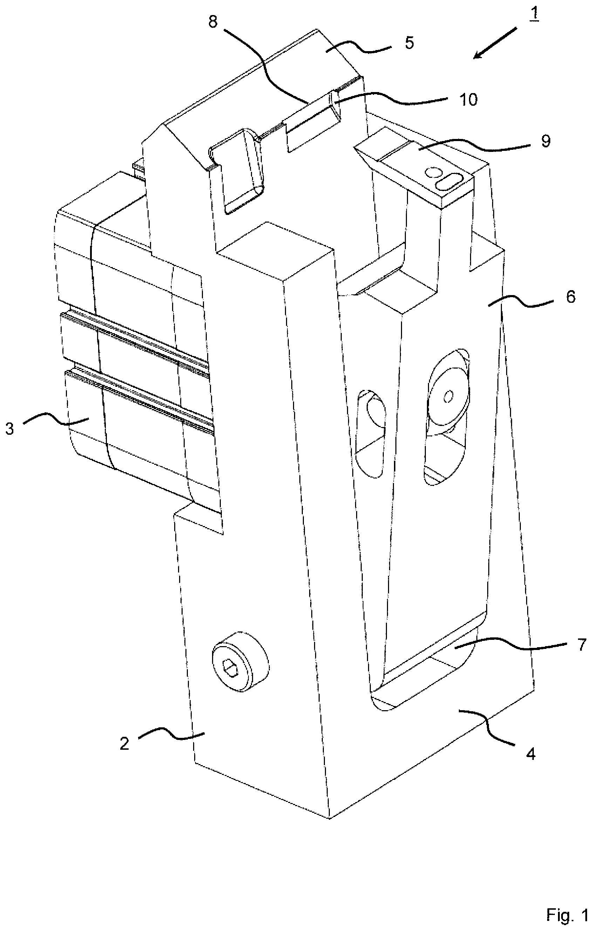

Unter Bezugnahme auf die Fig. 1 bis 4 wird nachfolgend eine Vorrichtung zum Nachbearbeiten eines Spritzgussbauteils erläutert.

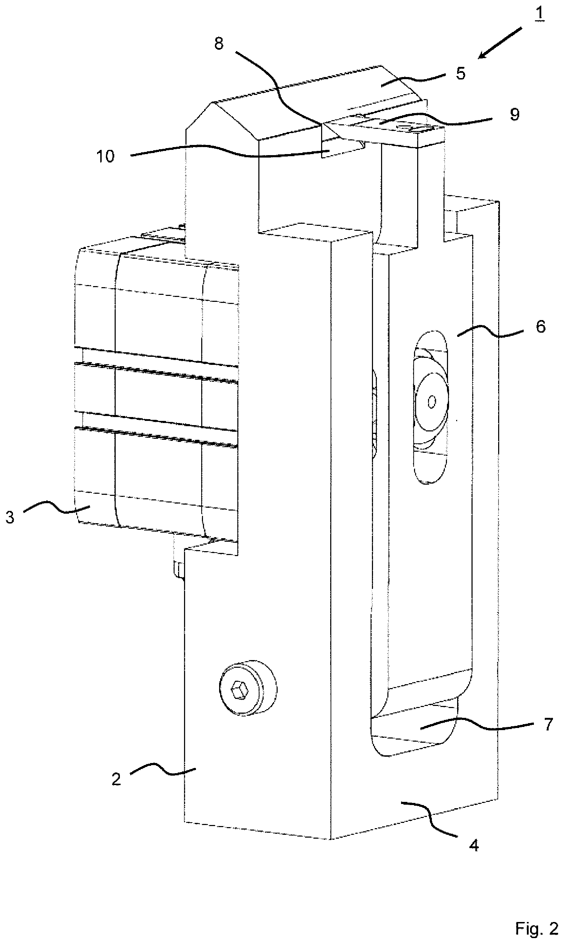

Die Fig. 1 und 2 zeigen perspektivische Darstellungen einer Vorrichtung 1 zum Nachbearbeiten eines Spritzgussbauteils, wobei ein Schneidwerkzeug in einer geöffneten und einer geschlossenen Stellung gezeigt ist. Die Vorrichtung 1 weist ein Auflagerbauteil 2 auf, welches in der gezeigten Ausführung mehrstückig mit einem Basisbauteil 3 und einem hieran montierten Auflagerelement 4 gebildet ist. Das Auflagerelement 4 weist eine Auflagefläche 5 auf, die über eine dreidimensionale Flächenkontur verfügt, welche an die Oberflächenkontur des zu bearbeitenden Spritzgussbauteils (nicht dargestellt) angepasst ist, derart, dass ein Auflageabschnitt des zu bearbeitenden Spritzgussbauteils im Bereich der Auflagefläche 5 formschlüssig zur Auflage kommt.

Bei der gezeigten Ausführungsform ist das Basisbauteil 2 als ein Montageblock ausgeführt, der die flexible Montage von unterschiedlichen Bauteilen hieran ermöglicht.

An dem Auflagerelement 4 ist ein als Hebelarm ausgeführtes, verlagerbares Bauteil 6 in einer Montageausnehmung 7 angeordnet, derart, dass das verlagerbare Bauteil 6 zwischen einer in Fig. 1 gezeigten, geöffneten Stellung und einer in Fig. 2 gezeigten, geschlossenen Stellung, die auch als Schneid- oder Scherstellung bezeichnet werden kann, verlagerbar ist. Zum Antrieb der Verlagerung zwischen der geschlossenen und der geöffneten Stellung koppelt das verlagerbare Bauteil 6 an eine Antriebseinrichtung (nicht dargestellt), die zum Beispiel als eine elektrische, eine hydraulische oder eine pneumatische Antriebseinrichtung ausgebildet ist. Im Fall der pneumatischen Antriebseinrichtung können Strömungskanäle zum Übertragen der Luftströmung in dem Basisbauteil 3 verlaufen. Die Antriebseinrichtung kann ganz oder teilweise in das Basisbauteil 3 integriert sein. Beispielsweise kann das Basisbauteil 3 mit einem Pneumatik- oder einem Hydraulikzylinder gebildet sein.

An dem Auflagerelement 4 ist eine Schneide 8 gebildet, die mit einer weiteren Schneide 9 zusammenwirkt, welche ihrerseits an dem verlagerbaren Bauteil 6 montiert ist, beispielsweise mittels einer Schraubverbindung. In der in Fig. 2 gezeigten, geschlossenen Stellung bewirkt die Zusammenarbeit der Schneide 8 sowie der weiteren Schneide 9 das Abtrennen des Angussstücks an dem aufgelagerten Spritzgussbauteil. In der geschlossenen Stellung greift die weitere Schneide 9 hierbei in eine an dem Auflagerelement 4 gebildete Ausnehmung 10 ein.

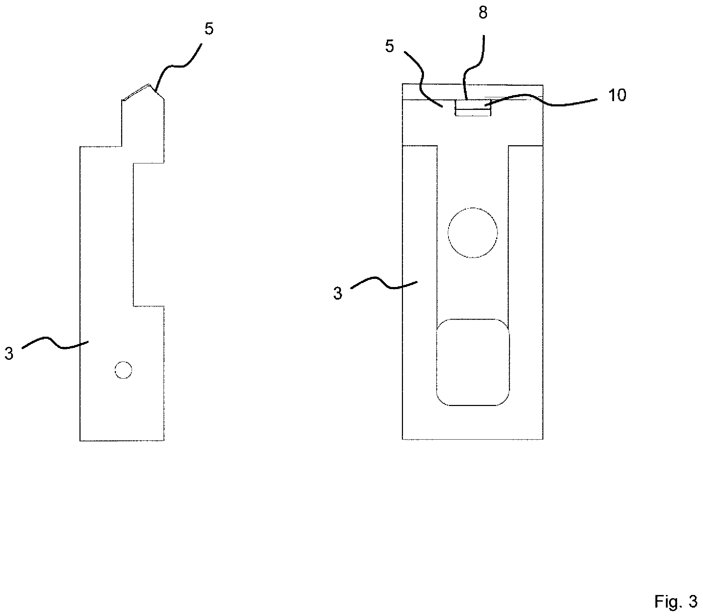

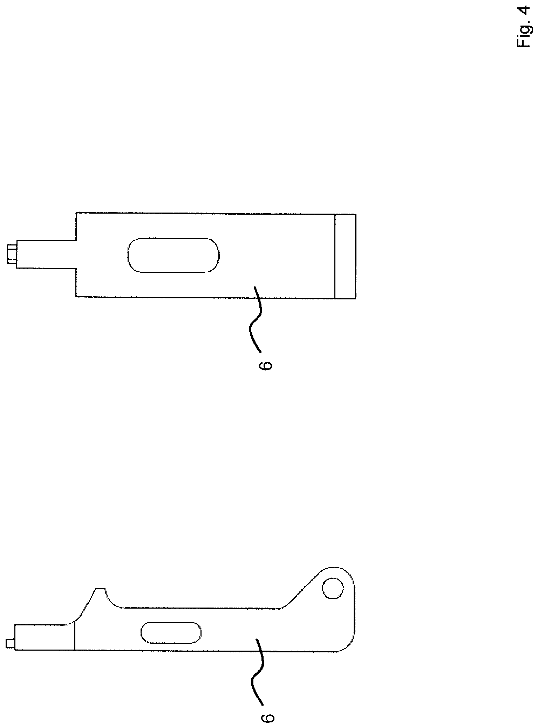

Die Fig. 3 und 4 zeigen Darstellungen von der Seite und von vorn des Auflagerelements 4 sowie des verlagerbaren Bauteils 6.

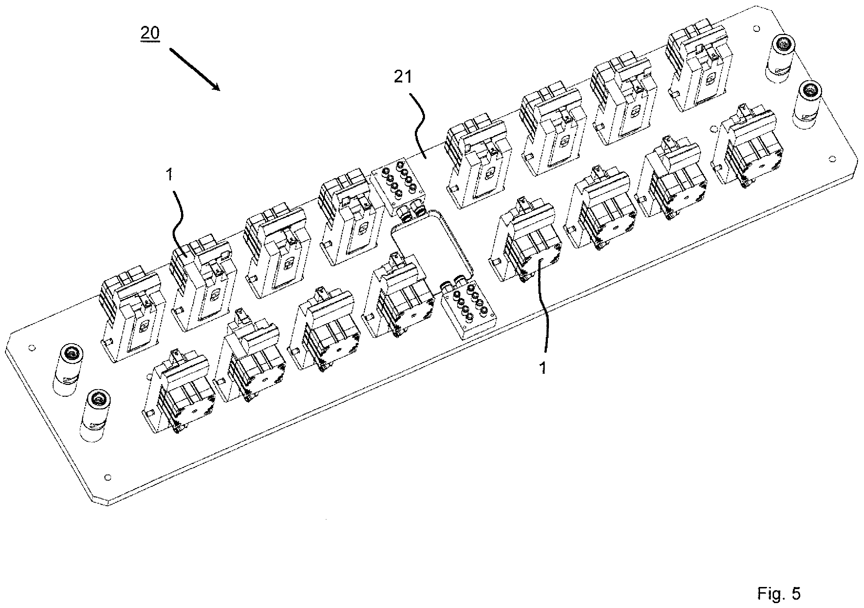

Fig. 5 zeigt eine perspektivische Darstellung eine Anordnung mit mehreren Vorrichtungen 20, bei der auf einer Tragplatte 21 mehrere Schneidvorrichtungen angeordnet sind, die der Vorrichtung 1 aus den Fig. 1 bis 4 entsprechend ausgebildet sind. Mit Hilfe dermehreren Vorrichtungen sind über die Tragplatte 21 verteilt Auflageflächen 5 bereitgestellt, an denen das zu bearbeitende Spritzgussbauteil zur Auflage kommt. Die jeweilige Schneidvorrichtung kann dann dazu genutzt werden, lokal ein oder mehrere Angussstücke abzutrennen.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Vorrichtung (1) zum Nachbearbeiten eines Spitzgussbauteils, mit
- einem Auflagerbauteil (2), an dem im Bereich einer Auflagerfläche (5) ein Spritzgussbauteil zum Nachbearbeiten zur Auflage kommt, wobei das Auflagerbauteil (2) mehrstückig mit einem Basisbauteil (3) und einem hieran angeordneten Auflagerelement (4) gebildet ist, an welchem das Spritzgussbauteil zum Nachbearbeiten im Bereich der Auflagerfläche (5) zur Auflage kommt, und
- einem Trennwerkzeug, welches eingerichtet ist, ein oder mehrere Angussstücke an dem auf dem Auflagerbauteil (2) angeordneten Spritzgussbauteil abzutrennen,
wobei das Trennwerkzeug mit einem Schneidwerkzeug gebildet ist, bei dem eine Schneide (8) an dem Auflagerbauteil (2) und eine weitere, der Schneide (8) zugeordnete Schneide (9) an einem verlagerbaren Bauteil (6) angeordnet sind, welches mit der weiteren Schneide (9) relativ zu dem Auflagerbauteil (2) und der hieran angeordneten Schneide (8) verlagerbar ist, derart, dass mittels der Schneide (8) und der weiteren Schneide (9) das eine oder die mehreren Angussstücke abtrennbar sind,
**dadurch gekennzeichnet, dass** an dem Auflagerelement (4) die Schneide (8) feststehend und das verlagerbare Bauteil (6) mit der hieran gebildeten weiteren Schneide (9) schwenkbar angeordnet sind.

2. Vorrichtung (1) nach Anspruch 1, **dadurch gekennzeichnet, dass** die Schneide (8) lösbar an dem Auflagerbauteil (2) moniert ist.

3. Vorrichtung (1) nach Anspruch 1 oder 2. **dadurch gekennzeichnet, dass** das Auflagerbauteil (2) benachbart zu der Schneide (8) eine äußere Ausnehmung (10) aufweist, die eingerichtet ist, die weitere Schneide (9) und / oder einen Abschnitt des verlagerbaren Bauteils (6) wenigstens teilweise aufzunehmen, wenn die weitere Schneide (9) zur Schneide (8) hin in eine geschlossene Stellung verlagert ist.

4. Vorrichtung (1) nach mindestens einem der vorangehenden Ansprüche, **dadurch gekennzeichnet, dass** das verlagerbare Bauteil (6) funktionell an eine Antriebseinrichtung koppelt, die eingerichtet ist, das verlagerbare Bauteil (6) mit der hieran angeordneten weiteren Schneide (9) zwischen einer geöffneten und der geschlossenen Stellung zu verlagern.

5. Vorrichtung (1) nach mindestens einem der vorangehenden Ansprüche, **dadurch gekennzeichnet, dass** die Auflagerfläche (5) eine dreidimensionale Flächenkontur aufweist, die eingerichtet ist, einen zugeordneten Auflagerabschnitt des Spritzgussbauteils formschlüssig aufzunehmen.

6. Anordnung mit mehreren Vorrichtungen (1) zum Nachbearbeiten eines Spitzgussbauteils nach mindestens einem der vorangehenden Ansprüche, wobei die mehreren Vorrichtungen (1) eingerichtet sind, jeweils einen Auflagerabschnitt eines nachzubearbeitenden Spritzgussbauteils aufzunehmen und bei aufgelagertem Spritzgussbauteil ein zugeordnetes Angussstück von dem Spritzgussbauteil abzutrennen.

## Claims

1. A device (1) for reworking an injection-moulded component, comprising
- a support component (2), on which an injection-moulded component comes to rest for the reworking in the region of a supporting surface (5), wherein the support component (2) is formed with a base component (3) and a support element (4) arranged thereto, at which the injection-moulded component comes to rest for reworking in the region of the supporting surface (5) and
- a separating tool which is configured for separating one or more sprue sections on the injection-moulded component positioned on the support component (2),
wherein the separating tool is formed with a cutting tool, in which one cutting edge (8) is arranged on the support component (2) and an additional cutting edge (9) assigned to said cutting edge (8) is arranged on a displaceable component (6) which can be displaced relative to the support component (2) and the cutting edge (8) arranged in such a manner that by means of the cutting edge (8) and the additional cutting edge (9), the one or more sprue sections can be separated,
**characterized in that** the cutting edge (8) is arranged on the support component (4) in a stationary manner and the displaceable component (6) is arranged pivotably with the additional cutting edge (9) formed thereon.

2. The device (1) according to claim 1, **characterized in that** the cutting edge (8) is separably mounted on the support component (2).

3. The device (1) according to claim 1 or 2, **characterized in that** the support component (2) comprises an outer recess (10) adjacent to the cutting edge (8), the recess (10) being configured to at least partially accommodate the additional cutting edge (9) and/or a section of the displaceable component (6) if the additional cutting edge (9) is displaced into a closed position towards the cutting edge (8).

4. The device (1) according to at least one of the preceding claims, **characterized in that** the displaceable component (6) is functionally coupled to a drive device which is configured to displace the displaceable component (6) with the additional cutting edge (9) arranged thereon between an open and the closed position.

5. The device (1) according to at least one of the preceding claims, **characterized in that** the supporting surface (5) has a three-dimensional surface contour which is configured to accommodate an assigned support section of the injection-moulded component in a form-fitting manner.

6. An arrangement comprising multiple devices (1) for reworking an injection-moulded component according to at least one of the preceding claims, wherein the multiple devices (1) are configured to respectively accommodate a support section of an injection-moulded component to be reworked and for separating an associated sprue section from an injection-moulded component when the injection-moulded component is supported thereon.

## Revendications

1. Dispositif (1) pour la finition d'un composant moulé par injection avec
- un composant de support (2), sur lequel vient en appui un composant moulé par injection dans la zone d'une surface d'appui (5), le composant de support (2) étant formé en plusieurs pièces avec un composant de base (3) et un élément de support (4) disposé sur celui-ci, sur lequel le composant moulé par injection vient en appui pour finition dans la zone de la surface de support (5), et
- un outil de séparation, lequel est agencé pour séparer une ou plusieurs pièces de carotte sur le composant moulé par injection disposé sur le composant de support (2),
l'outil de séparation étant formé avec un outil tranchant pour lequel un tranchant (8) est disposé sur le composant de support (2) et un autre tranchant (9) attribué au tranchant (8) étant disposé sur un composant déplaçable (6), lequel peut être déplacé avec l'autre tranchant (9) par rapport au composant de support (2) et au tranchant (8) disposé sur celui-ci de telle manière qu'une ou plusieurs pièces de carotte peuvent être séparées au moyen du tranchant (8) et de l'autre tranchant (9),
**caractérisé en ce que** le tranchant (8) est situé fixement sur l'élément de support (4) et le composant déplaçable (6) est disposé pouvant pivoter avec l'autre tranchant (9) formé sur celui-ci.

2. Dispositif (1) selon la revendication 1, **caractérisé en ce que** le tranchant (8) est monté de façon amovible sur le composant de support (2).

3. Dispositif (1) selon la revendication 1 ou 2, **caractérisé en ce que** le composant de support (2) comporte un évidement extérieur (10) adjacent au tranchant (8), l'évidement extérieur (10) étant agencé pour loger au moins en partie l'autre tranchant (9) et/ou une section du composant déplaçable (6), si l'autre tranchant (9) est déplacé vers le tranchant (8) dans une position fermée.

4. Dispositif (1) selon au moins l'une quelconque des revendications précédentes, **caractérisé en ce que** le composant déplaçable (6) est couplé de façon fonctionnelle à un dispositif d'entraînement, qui est agencé pour déplacer le composant déplaçable (6) avec l'autre tranchant (9) disposé sur celui-ci entre une position ouverte et la position fermée.

5. Dispositif (1) selon au moins l'une quelconque des revendications précédentes, **caractérisé en ce que** la surface de support (5) comporte un contour de surface tridimensionnel, qui est agencé pour loger par conformité de forme une section de support du composant moulé par injection.

6. Agencement avec plusieurs dispositifs (1) pour la finition d'un composant moulé par injection selon l'une quelconque des revendications précédentes, les plusieurs dispositifs (1) étant agencés pour loger respectivement une section de support d'un composant moulé par injection à finir et séparer d'un composant moulé par injection une pièce de carotte attribuée sur un composant moulé par injection en appui.
